# EUROPÄISCHE PATENTSCHRIFT

(11) **EP 1 449 789 B1**
(45) Veröffentlichungstag und Bekanntmachung des Hinweises auf die Patenterteilung: **08.08.2007**
(21) Anmeldenummer: 03405102.9
(22) Anmeldetag: 19.02.2003
(51) Int. Cl.: B65D 77/20, B65D 75/58, B32B 27/08

(54) **Verpackungsbehälter mit einer Verpackungsfolie mit integriertem Offnungs-und Wiederverschliesssystem**
Packaging container comprising a packaging foil having an integral system for opening and re-closing
Conteneur d'emballage comprenant une feuille d'emballage ayant un système intégré d'ouverture et de refermeture

(43) Veröffentlichungstag der Anmeldung: 25.08.2004
(73) Patentinhaber: Alcan Technology & Management Ltd., 8212 Neuhausen am Rheinfall (CH)
(72) Erfinder: Pierron, Eliane, 57400 Imling (FR); Froemer, Frédéric, 57445 Reding (FR)

(56) Entgegenhaltungen:
- EP-A- 0 661 154
- WO-A-01/04020
- WO-A-02/066341
- DE-U- 20 210 951
- US-A- 4 260 061
- US-A- 4 610 357
- US-A- 6 056 141

## Beschreibung

Die Erfindung betrifft ein Verfahren zur Herstellung eines Verpackungsbeutels nach dem Oberbegriff von Anspruch 1..

Bekannte Beutelverpackungen weisen einen Öffnungsmechanismus in der Form einer Einreisskerbe auf. Das Wiederverschliessen von Beuteln erfolgt beispielsweise mittels eines eingesiegelten Zippers oder über eine der Verpackung beigefügte Haftetikette. Die erwähnten Systeme zum leichten Öffnen und Wiederverschliessen funktionieren getrennt voneinander und werden üblicherweise auf der Beutelabfüllmaschine angebracht. Dies führt beispielsweise im Fall von Zippereinsiegelanlagen zu teuren Zusatzinvestitionen, die jeder einzelne Betreiber einer Beutelabfüllmaschine im Bedarfsfall tätigen muss.

Aus der EP-A-0 541 093 ist eine Beutelverpackung bekannt, bei der zwei Verpackungsfolien über eine umlaufende Siegelnaht unter Bildung einer geschlossenen Verpackung miteinander verbunden sind. An einer der Beutelkanten ist die Haftkraft zwischen den gegeneinander gesiegelten Folien so eingestellt, dass sie sich durch seitlichen Zug unter Bildung einer Öffnung voneinander trennen. Unterhalb dieser Beutelkante ist ein Zipper eingesiegelt, der das Wiederverschliessen des Beutels ermöglicht.

Die EP-A- 0 661 154 offenbart eine Behälterschale mit einem umlaufenden Siegelrand, auf dem eine zweilagige Deckelfolie aufgesiegelt ist. Diese zweilagige Deckelfolie besteht aus einer behälternahen ersten Folie, in welcher ein zu öffnender Bereich von einer Schwächungslinie begrenzt ist. Die darüberliegende zweite Folie ist mit einem umlaufenden Rand gegen die erste Folie gesiegelt, wobei die Haftkraft in diesem Randbereich zwischen der ersten und der zweiten Folie so eingestellt wird, dass sich die zweite Folie von der ersten Folie abziehen lässt. Die übrige, der ersten Folie gegenüberliegende Fläche der zweiten Folie ist innerhalb des umlaufenden Siegelrandes mit einem Selbsthaftkleber beschichtet. Nach dem erstmaligen Öffnen des Behälters durch Abziehen der zweiten Folie von der ersten Folie bleibt der von der Schwächungslinie begrenzte Öffnungsteil der ersten Folie über den Selbsthaftkleber an der zweiten Folie haften, so dass die Öffnung freigegeben wird. Durch Zurücklegen der ersten Folie auf die zweite Folie kann der Behälter mittels des zwischen den beiden Folien angeordneten Selbsthaftklebers wieder verschlossen werden. Die für die Umverpackung eingesetzte Verpackungsfolie umfasst als integriertes System zum leichten Öffnen und Wiederverschliessen zwei ausserhalb des Bereichs des Öffnungs- und Wiederverschliesssystems über einen Permanentkleber miteinander verbundene Folien. Hierbei weist eine innere Folie eine erste Perforation als Öffnung und eine äussere Folie eine zweite Perforation zur Bildung einer die erste Perforation überdeckenden Verschliesslasche auf. Im Randbereich der Verschliesslasche ist zwischen den beiden Folien ein Selbsthaftkleber angeordnet.

Aus der US-A-5 350 062 ist eine Verpackungsfolie bekannt, die nach dem Umwickeln eines zu verpackenden Gegenstandes zu einer Verpackung mit einer wiederverschliessbaren Öffnung führt.

Ein Verpackungsbehälter der eingangs genannten Art mit einer Verpackungsfolie mit integriertem Öffnungs- und Wiederverschliesssystem ist in der EP-A-0 957 045 offenbart. Die von einer Verschlusslasche wiederverschliessbare Öffnung besteht aus einem in der Verpackungsfolie angeordneten Schlitz, der durch seitliches Zusammendrücken eines als Verpackungsbehälter dienenden Beutels erweitert werden kann. Die Öffnung eignet sich zur Entnahme schüttfähiger Füllgüter aus Beutelverpackungen und ist insbesondere zur Entnahme von portionierten Füllgütern kaum geeignet. Bei der Verwendung der Verpackungsfolie als Deckel eines starren Behälters lässt sich der Schlitz wegen der fehlenden Zusammendrückbarkeit des Behälters praktisch nicht zu einer brauchbaren Öffnung erweitern.

Die WO-A-02/066341 offenbart einen Verpackungsbehälter mit einem Öffnungs- und Wiederverschliesssystem. Das System ist nicht Teil der Verpackungsfolie, sondern als eigenständiges Folienteil auf die bereits mit einer Schwächungslinie ausgestattete Verpackungsfolie aufgeklebt.

Bei einem aus der US-A-4 260 061 bekannten Verpackungsbehälter mit einem Öffnungs- und Wiederverschliesssystem ist das System nur teilweise in die Verpackungsfolie integriert. Die Verschliesslasche ist nur teilweise innerhalb der Verpackungsfolie angeordnet.

Der Erfindung liegt die Aufgabe zugrunde, ein einfaches Verfahren zur Herstellung, eines Verpackungsbeutels mit einer Verpackungsfolie der eingangs genannten Art zu schaffen.

Zur erfindungsgemässen Lösung der Aufgabe führt ein Verfahren mit den Merkmalen von Anspruch 1.

Im Gegensatz zum Öffnungs- und Wiederverschliesssystem nach der EP-A-0 957 045 ist beim erfindungsgemässen System die Grösse der Öffnung durch die von der ersten Schwächungslinie in der inneren Folie begrenzten Öffnungsfläche vorbestimmt und kann dem jeweiligen Füllgut angepasst werden. Zudem ist die Verpackungsfolie mit dem integrierten Öffnungs- und Wiederverschliesssystem universell anwendbar und insbesondere auch zum Verschliessen starrer Behälter geeignet.

Die Verpackungsfolie mit integriertem Öffnungs- und Wiederverschliesssystem bietet gegenüber anderen bekannten Systemen den Vorteil, dass bei der späteren Herstellung und Befüllung der Behälter keine weiteren Massnahmen zur Bereitstellung eines Öffnungs- und Wiederverschliesssystems erforderlich sind.

Neben dem bereits erwähnten Wegfall zusätzlicher Investitionen lässt sich beispielsweise die Produktivität auf Beutelabpackmaschinen erhöhen.

Ein Randteil der Verschliesslasche kann als Greif- und Aufreisshilfe ausgebildet sein. Zweckmässigerweise ist zwischen den beiden Folien im Bereich der Greif-und Aufreisshilfe eine Antihaftbeschichtung angeordnet.

Die erste Schwächungslinie kann die innere Folie vollständig durchtrennen. In diesem Fall ist die Öffnung schon vor dem erstmaligen Wegziehen der Verschliesslasche vorhanden.

Auch die zweite Schwächungslinie kann so ausgebildet sein, dass sie die äussere Folie vollständig durchtrennt. In diesem Fall ist die Schliesslasche im Abziehbereich nur noch über den Selbsthaftkleber mit der inneren Folie verbunden.

Die Schwächungslinien können auch so angeordnet sein, dass sie nicht über die gesamte Dicke der Folien durchgehen und/oder die Folien nur teilweise durchtrennen. Diese Ausbildung der Schwächungslinien mit nicht vollständig durchtrennten Folien kann als Erstöffnungsgarantie dienen.

Als Material für die innere Folie wird ein Kunststofffilm bevorzugt, insbesondere ein Film aus
- orientiertem Polypropylen (OPP), 15 bis 40 µm, oder
- Polyethylen (PE), 15 bis 120 µm, oder
- Polystyrol (PS), 15 bis 40 µm, oder
- Polylactat (PLA), 15 bis 40 µm, oder
- Polyethylenterephtalat (PET), 12 bis 36 µm, oder
- biaxial verstrecktem oder cast Polyamid (PA), 12 bis 40 µm, oder
- Zellglas, 30 bis 40 g/m², oder
- einer beliebigen ein- oder mehrlagigen Kombination der genannten Filme.
   Der Kunststofffilm kann transparent, opak oder metallisiert sein. Eine geeignete Metallisierung besteht beispielsweise aus einer im Vakuum abgeschiedenen Aluminiumschicht. Ein weiteres, für die innere Folie geeignetes Material ist Papier mit einem Gewicht von 20 bis 80 g/m².
   Die innere Folie kann auch ein Verbund aus einer der vorstehend genannten Kunststofffilme oder Papier und einer Aluminiumfolie einer Dicke von 5 bis 50 µm mit einer Klebstoffzwischenschicht sein. Als Klebstoffe eignen sich die für die Verklebung der inneren mit der äusseren Folie eingesetzten Formulierungen.
   Die innere Folie soll gegen sich selbst oder gegen eine Unterlage aus einem anderen Material siegelbar sein. Falls die innere Folie selbst nicht siegelbar ist, kann die Siegelung oder Verklebung mit einem Lackauftrag, einem Thermoschmelzkleber oder einer spezifischen Extrusionsbeschichtung mit einem Harz erreicht werden.
   Als Material für die äussere Folie eignet sich ein Kunststofffilm, insbesondere ein Film aus
- orientiertem Polypropylen (OPP), 15 bis 40 µm, oder
- Polyethylen hoher Dichte (PEHD), 15 bis 40 µm, oder
- Polystyrol (PS), 15 bis 40 µm, oder
- Polylactat (PLA), 15 bis 40 µm, oder
- Polyethylenterephtalat (PET), 12 bis 36 µm, oder
- biaxial verstrecktem oder cast Polyamid (PA), 12 bis 40 µm, oder
- Zellglas, 30 bis 40 g/m², oder
- einer beliebigen ein- oder mehrlagigen Kombination der genannten Filme.
   Der Kunststofffilm kann transparent, opak oder metallisiert sein. Eine geeignete Metallisierung besteht beispielsweise aus einer im Vakuum abgeschiedenen Aluminiumschicht. Ein weiteres, für die äussere Folie geeignetes Material ist Papier mit einem Gewicht von 20 bis 80 g/m².
   Die äussere Folie kann auch ein Verbund aus einer der vorstehend genannten Kunststofffilme oder Papier und einer Aluminiumfolie einer Dicke von 5 bis 50 µm mit einer Klebstoffzwischenschicht sein. Als Klebstoffe eignen sich die für die Verklebung der inneren mit der äusseren Folie eingesetzten Formulierungen.
   Die äussere Folie kann unbedruckt oder bedruckt sein. Bevorzugte Druckverfahren sind die Helio- und die Flexografie. Eine Bedruckung kann auf der Aussenseite der äusseren Folie oder bei transparenter äusserer Folie auch auf deren Rückseite angeordnet sein.
   Der Permanentkleber wird bevorzugt vollflächig auf die innere oder äussere Folie aufgetragen. Die Beschichtung erfolgt beispielsweise durch Auftrag von
- in Lösungsmittel gelöstem Klebstoff, 2,0 bis 4,0 g/m², oder
- Klebstoff ohne Lösungsmittel, 1,3 bis 2,0 g/m², oder
- wässriger Klebstofflösung, 0,9 bis 6,0 g/m², oder
- einer Polymerharzextrusionsschicht, 2,0 bis 15,0 g/m².

Als Permanentkleber eignet sich beispielsweise ein Kleber auf der Basis von Polyurethan.

Ein geeigneter Selbsthaftkleber (PSA, pressure sensitive adhesive) ist auf der Basis von Polyacrylat oder anderen selbstklebenden Harzen aufgebaut.

Weitere Vorteile, Merkmale und Einzelheiten der Erfindung ergeben sich aus den nachfolgenden Beschreibung bevorzugter Ausführungsbeispiele sowie anhand der Zeichnung; diese zeigt schematisch in
- Fig.1 eine Schrägsicht auf eine Verpackungsfolie mit integriertem Öffnungs- und Wiederverschliesssystem;
- Fig. 2 - 5 verschiedene Verpackungsbehälter mit der Verpackungsfolie mit integriertem Öffnungs- und Wiederverschliesssystem von Fig. 1;
- Fig. 6 die Draufsicht auf die gegen die äussere Folie gerichtete Seite der inneren Folie der Verpackungsfolie von Fig. 1;
- Fig. 7 einen Querschnitt durch die innere Folie von Fig. 6 nach deren Linie I - I;
- Fig. 8 einen Querschnitt durch die innere Folie von Fig. 6 nach deren Linie II - II;
- Fig. 9 die Draufsicht auf die gegen die innere Folie gerichtete Seite der äusseren Folie der Verpackungsfolie von Fig. 1;
- Fig. 10 einen Querschnitt durch die äussere Folie von Fig. 9 nach deren Linie I - I:
- Fig. 11 einen Querschnitt durch die äussere Folie von Fig. 9 nach deren Linie II - II;
- Fig. 12 die Draufsicht auf die aus der inneren und äusseren Folie der Fig. 6 und 9 zusammengesetzten Verpackungsfolie von Fig. 1;
- Fig. 13 einen Querschnitt durch die Verpackungsfolie von Fig. 12 nach deren Linie I - I;
- Fig. 14 einen Querschnitt durch die Verpackungsfolie von Fig. 12 nach deren Linie II - II;
- Fig. 15 einen Längsschnitt durch eine Anlage zur Herstellung der Verpackungsfolie von Fig. 12;
- Fig. 16 die Draufsicht auf die innere und äussere Folie in der Anlage von Fig. 15.

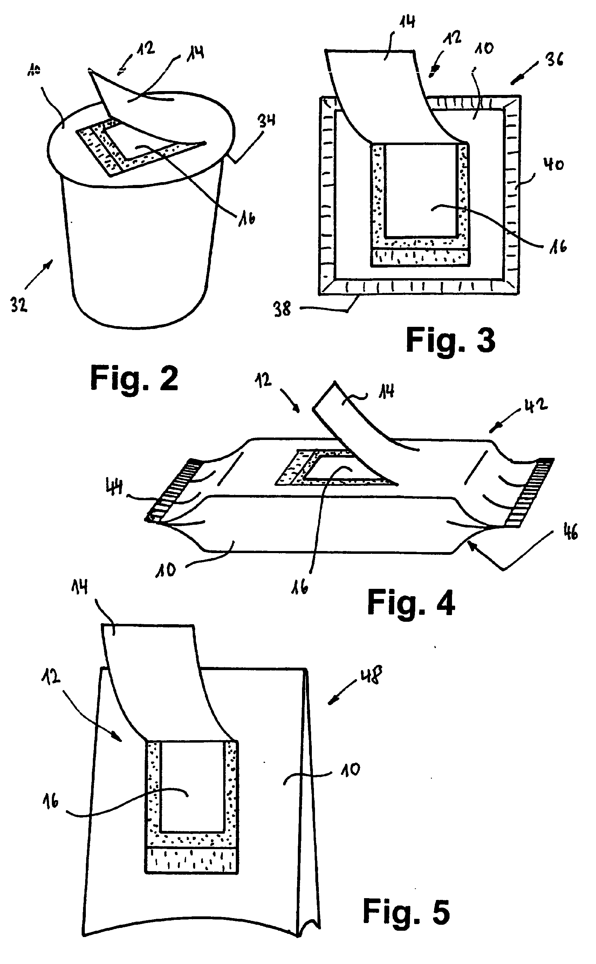

Fig. 2 zeigt einen Deckel mit einem System, das dem aus dem erfindungsgemässen Verfahren erhältlichen ähnelt, der jedoch nicht unter den Schutzbereich der Ansprüche fällt.

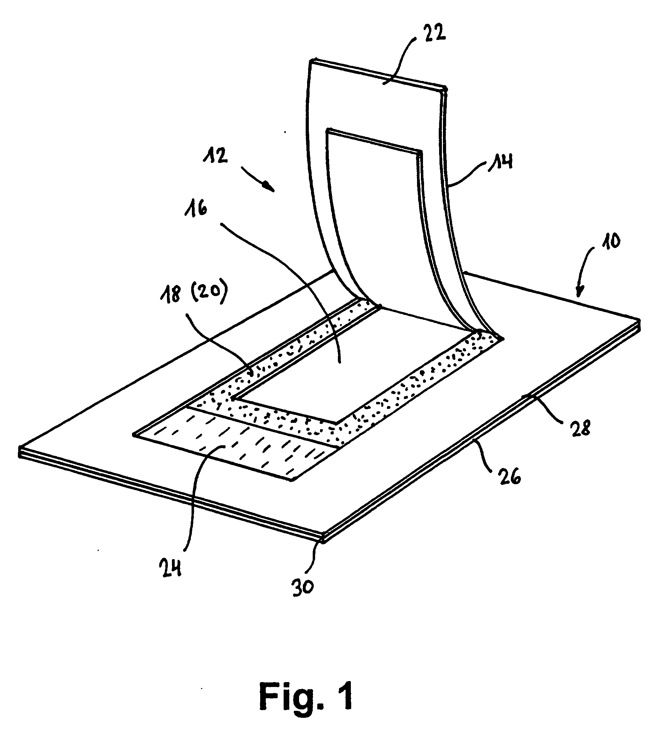

Eine in Fig. 1 gezeigte Verpackungsfolie 10 mit integriertem Öffnungs- und Wiederverschliesssystem 12 weist eine Verschliesslasche 14 zum Wiederverschliessen einer Öffnung 16 auf. Die Verschliesslasche 14 ist als Teil der Verpackungsfolie 10 aus dieser heraustrennbar, wobei beim Heraustrennen der Verschliesslasche 14 aus bzw. Wegziehen von der Verpackungsfolie 10 die Öffnung 16 in der Verpackungsfolie 10 gebildet bzw. freigegeben wird. Die Wiederverschliessbarkeit der Öffnung 16 wird mittels eines im Randbereich 18 der Öffnung 16 aufgetragenen Selbsthaftklebers 20 erreicht. Ein Randteil der Verschliesslasche 14 ist als Greif- und Aufreisshilfe 22 vorgesehen, deren Innenseite im ungeöffneten Zustand einer Antihaftbeschichtung 24 anliegt.

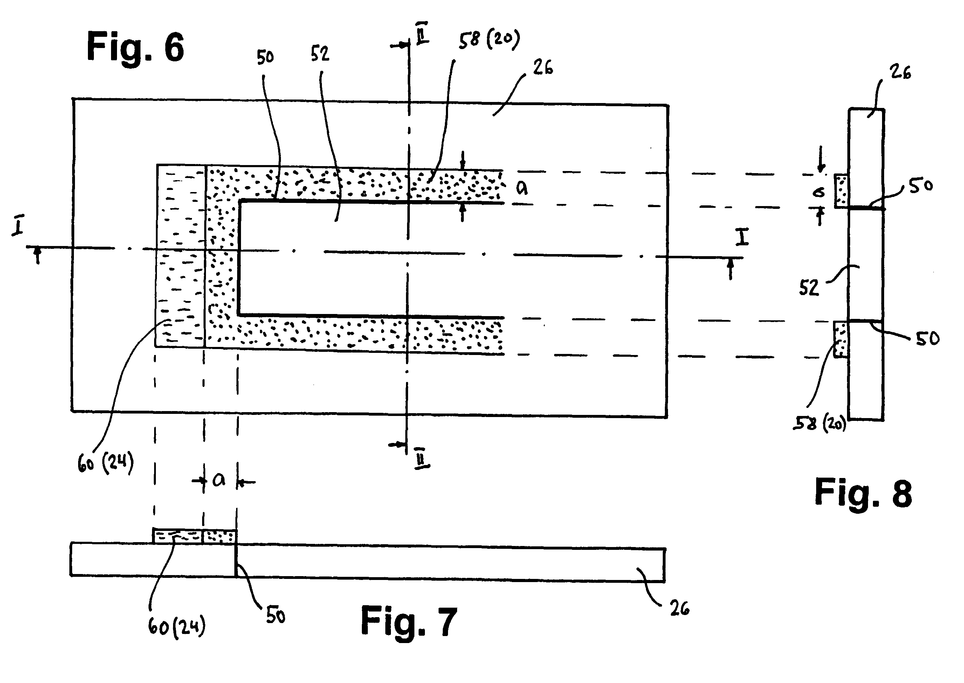

Die Verpackungsfolie 10 weist eine die spätere Innenseite einer Verpackung bildende innere Folie 26 auf, die, mit Ausnahme der weiter unten anhand der Fig. 6 bis 14 beschriebenen Bereiche, über einen Permanentkleber 30 mit einer die spätere Aussenseite der Verpackung bildenden äusseren Folie 28 trennfest verbunden ist.

Die Verpackungsfolie 10 mit integriertem Öffnungs- und Wiederverschliesssystem 12 kann zur Herstellung verschiedener Verpackungsbehälter eingesetzt werden, wovon einige in den Fig. 2 bis 5 dargestellt sind.

Fig. 2 zeigt einen Becher 32, auf dessen Rand 34 eine als Deckel zugeschnittene Verpackungsfolie 10 mit integriertem Öffnungs- und Wiederverschliesssystem 12 aufgesiegelt ist. Es versteht sich von selbst, dass anstelle des gezeigten Bechers 32 irgend ein offener Behälter mit einem geeigneten Rand zum Aufsiegeln oder Aufkleben der Verpackungsfolie dienen kann. Der Behälter kann aus einem beliebigen Material bestehen und eine starre oder flexible Gestalt aufweisen.

Ein in Fig. 3 gezeigter Flachbeutel 36, der auch ein Sachet sein kann, besteht aus einer Rückwandfolie 38, welche über eine umlaufende Siegelnaht 40 mit der Verpackungsfolie 10 mit integriertem Öffnungs- und Wiederverschiesssystem 12 unter Bildung eines wiederverschliessbaren Beutels oder Sachets verbunden ist.

Fig. 4 zeigt einen Schlauchbeutel 42 mit zwei endständigen Quersiegelnähten 44 und einer Längssiegelnaht 46. Zur Herstellung dieser Schlauchbeutel 42 wird die Verpackungsfolie 10 als Rollenware eingesetzt und unter Bildung der Längssiegelnaht 46 gegen sich selbst gesiegelt.

Ein in Fig. 5 gezeigter Standbeutel 48 weist die Verpackungsfolie 10 mit integriertem Öffnungs- und Wiederverschliesssystem 12 als Vorder- oder Rückseite des Beutels auf.

Wie die in den Fig. 2 bis 5 dargestellten Verpackungsbehälter zeigen, kann die Verpackungsfolie 10 mit integriertem Öffnungs- und Wiederverschliesssystem 12 sowohl in Rollenform als auch in der Form einzelner Zuschnitte eingesetzt werden. Die Verpackungsfolie 10 kann so ausgestaltet sein, dass sie sowohl gegen einen anderen Verpackungsteil als auch gegen sich selbst gesiegelt werden kann.

Der Aufbau der in Fig. 1 gezeigten Verpackungsfolie 10 und die Wirkungsweise des integralen Öffnungs- und Wiederverschliesssystems 12 werden nachfolgend anhand der Fig. 6 bis 14 näher erläutert.

Aus den Fig. 6 bis 8 ist die Anordnung einer ersten Schwächungs- oder Schnittlinie 50 an der inneren Folie 26 erkennbar. Die Schwächungslinie 50 begrenzt eine Öffnungsfläche 52, die nach dem Wegtrennen der Verschliesslasche 14 die Öffnung 16 freigibt. Am äusseren Rand der Öffnungsfläche 52 ist ein Streifen 58 einer Breite a mit dem Selbsthaftkleber 20 beschichtet. Im Bereich der Greif- und Aufreisshilfe 22 ist eine an den Selbsthaftkleberstreifen 58 angrenzende Zone 60 mit der Antihaftbeschichtung 24 angeordnet.

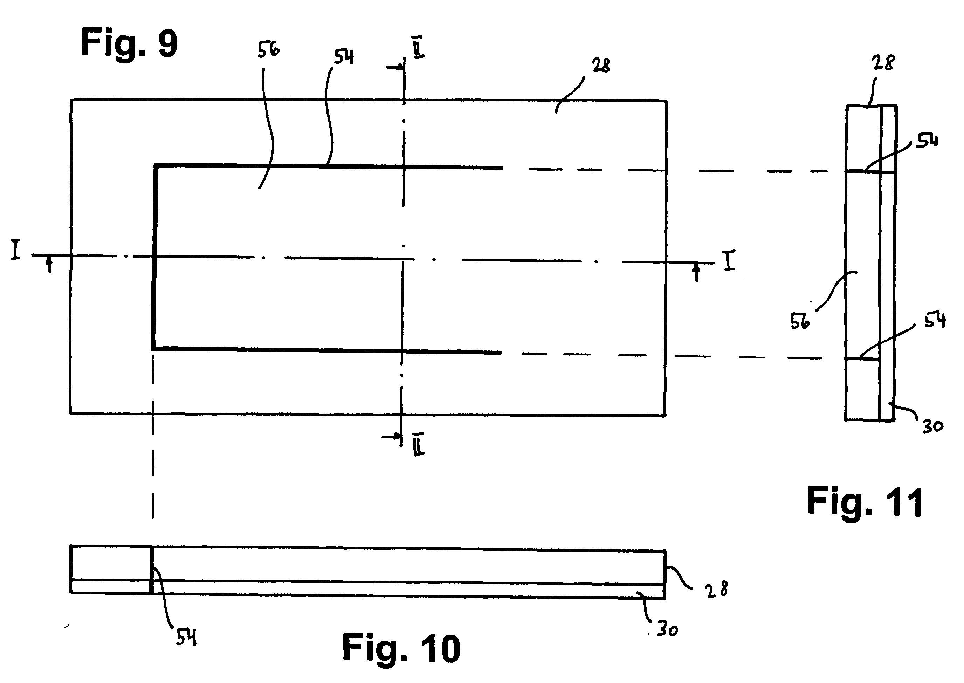

Die Fig. 9 bis 11 zeigen eine zweite Schwächungslinie 54 in der äusseren Folie 28. Die zweite Schwächungslinie 54 begrenzt eine Verschliessfläche 56, welche der Fläche der Verschliesslasche 14 nach deren Heraustrennen aus der Verbundfolie 10 entspricht. Die äussere Folie 28 ist mit dem Permanentkleber 30 beschichtet.

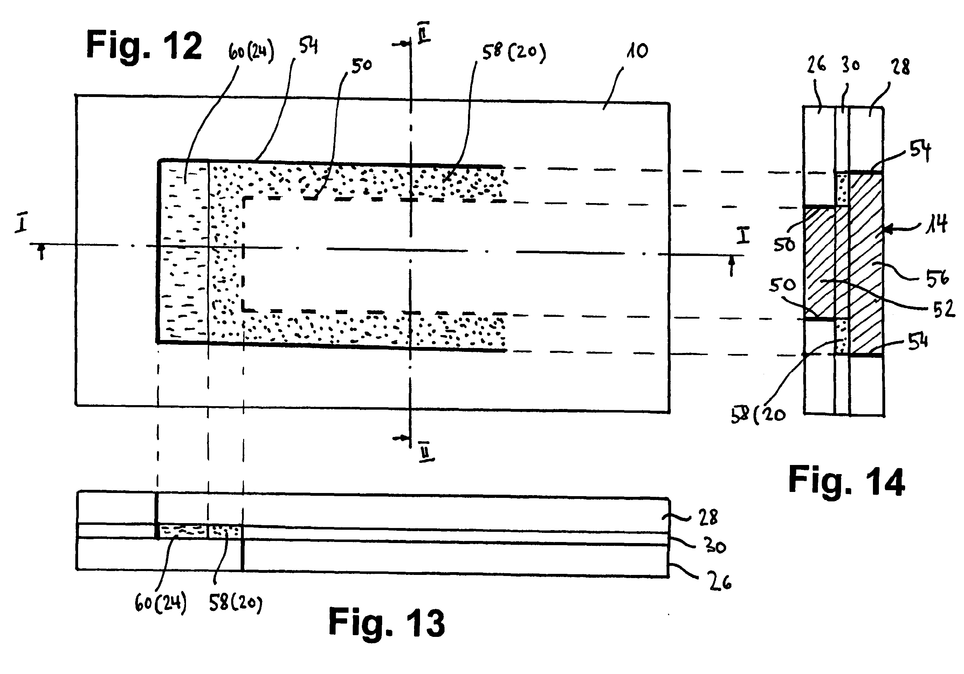

Der Aufbau der Verpackungsfolie 10 aus der inneren Folie 26 gemäss den Fig. 6 bis 8 und der äusseren Folie 28 gemäss den Fig. 9 bis 11 ist am besten aus der Zusammenschau von Fig. 1 mit den Fig. 12 bis 14 ersichtlich und wird nachfolgend erläutert.

Die innere Folie 26 ist mit der äusseren Folie 28, mit Ausnahme des Bereichs zwischen der ersten Schwächungslinie 50 und der zweiten Schwächungslinie 54, über den Permanentkleber 30 trennfest verbunden. Beim Lösen der Verschliesslasche 14 aus der Verpackungsfolie 10 erfolgt eine Trennung der inneren Folie 26 an der ersten Schwächungslinie 50 und eine Trennung der äusseren Folie 28 an der zweiten Schwächungslinie 54. Da die Öffnungsfläche 52 der inneren Folie 26 über den Permanentkleber 30 mit der äusseren Folie 28 trennfest verbunden ist, wird beim Anheben der Verschliesslasche 14 die Öffnung 16 freigegeben. Die Wiederverschliessbarkeit ergibt sich durch die Anordnung des Selbsthaftkleberstreifens 58, dessen Breite a dem Abstand zwischen der ersten Schwächungslinie 50 und der zweiten Schwächungslinie 54 entspricht. Durch die Antihaftbeschichtung 24 im Bereich der Greif- und Aufreisshilfe 22 erfolgt bei der Verklebung der inneren Folie 26 mit der äusseren Folie 28 im Bereich der streifenförmigen Antihaftzone 60 der inneren Folie 26 keine Verbindung mit der angrenzenden äusseren Folie 28, so dass die Greif- und Aufreisshilfe 22 der Verschliesslasche 14 leicht fassbar ist.

Die beispielhaft gewählte Beschichtung der inneren Folie 26 mit dem Selbsthaftkleber 20 und dem Antihaftmittel 24 und der äusseren Folie 28 mit dem Permanentkleber 30 ist nicht zwingend. Die innere Folie 26 kann auch mit dem Permanentkleber 30 und die äussere Folie 28 mit dem Selbsthaftkleber 20 und dem Antihaftmittel 24 beschichtet sein. Selbsthaftkleber 20 und Antihaftmittel 24 müssen auch nicht auf derselben Folie angeordnet sein.

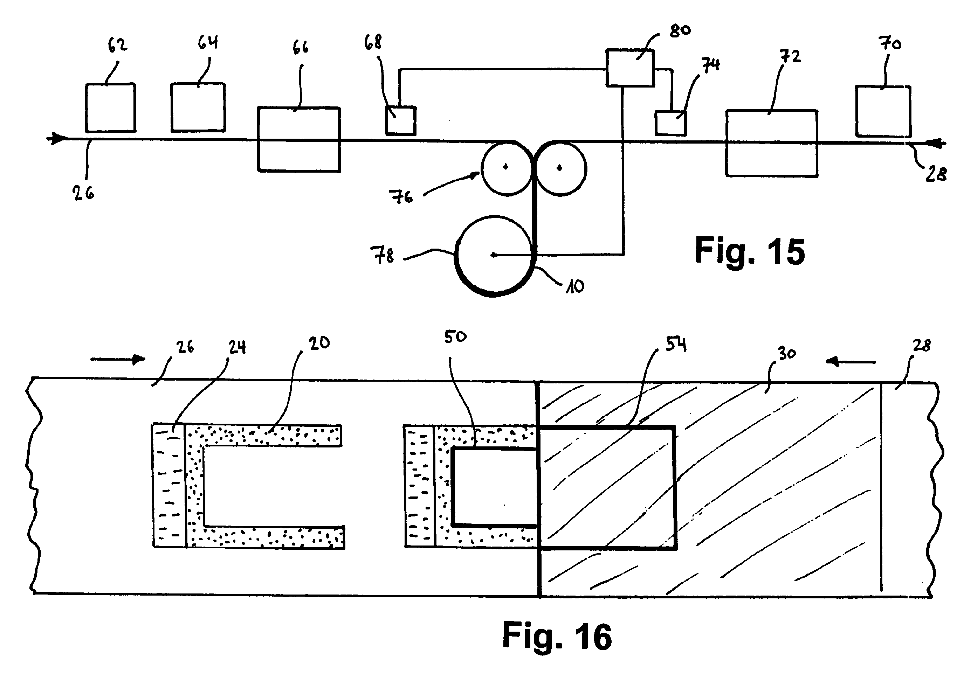

Eine in den Fig. 15 und 16 dargestellte Anlage zur kontinuierlichen Fertigung einer Verpackungsfolie 10 mit integriertem Öffnungs- und Wiederverschliesssystem 12 weist eine erste Auftragstation 62 zum partiellen Auftragen der Antihaftschicht 24 in der streifenförmigen Zone 60 auf. Der ersten Auftragstation 62 in Bandlaufrichtung nachgeordnet ist eine zweite Auftragstation 64 zum partiellen Auftragen des Selbsthaftklebers 20 in Form der Streifen 58 auf die in Bandform vorliegende innere Folie 26. Nach der Beschichtung der inneren Folie 26 mit dem Selbsthaftkleber 20 und dem Antihaftmittel 24 wird die beschichtete innere Folie 26 durch einen ersten Trocknungsofen 66 geführt. In einer nachfolgenden ersten Schneidstation 68 werden die ersten Schwächungs- oder Schnittlinien 50 in Bandlaufrichtung und quer dazu in die innere Folie 26 geprägt oder geschnitten.

Die ebenfalls in Bandform vorliegende äussere Folie 28 wird in einer dritten Auftragstation 70 mit dem Permanentkleber 30 beschichtet und durchläuft anschliessend einen zweiten Trocknungsofen 72. In einer nachfolgenden zweiten Schneidstation 74 werden die zweiten Schwächungs- bzw. Schnittlinien 54 in Bandlaufrichtung sowie quer dazu in die äussere Folie 28 geprägt oder geschnitten. Das Schneiden der Schwächungslinien 50, 54 in Form von Perforationen oder durchgehenden Schnittlinien kann mittels mechanischer Messer oder berührungslos beispielsweise über ein Laserschneidgerät erfolgen.

Die derart vorkonfektionierten Folien 26, 28 werden in einer Kaschierstation 76 unter Bildung der Verpackungsfolie 10 mit integriertem Öffnungs- und Wieder verschliesssystem 12 zusammengeführt und miteinander verklebt. Die aus der Kaschierstation 76 austretende Verpackungsfolie 10 wird nachfolgend zu einer Rolle 78 aufgewickelt.

Da die äussere Folie 26 und die innere Folie 28 in der Kaschierstation 76 passgenau zusammengeführt werden müssen, werden die Schneidoperationen in den Schneidstationen 68, 74 sowie die Bandlaufgeschwindigkeiten der beiden Folien 26, 28 über eine Regelvorrichtung entsprechend gesteuert. Diese Steuerung kann beispielsweise in bekannter Art über am Rand der Folienbänder angebrachte Druckmarken erfolgen.

Die gemäss dem vorstehend beschriebenen Verfahren hergestellte Verpackungsfolie 10 kann in bekannter Weise zur Herstellung von Verpackungsbeuteln, Deckelfolien und weiteren Verpackungsteilen weiterverarbeitet werden.

Die Verpackungsfolie 10 mit integriertem Öffnungs- und Wiederverschliesssystem 12, kann in Abhängigkeit von der späteren Verwendung, in verschiedenen Formen hergestellt werden, so beispielsweise als Folienband mit mehreren parallelen Beuteleinheiten, die nach der Kaschierstation 76 in einzelne Einheiten aufgetrennt werden. Auch kann die in Bandform vorliegende Verpackungsfolie 10 in einzelne, für eine spezifische Anwendung wie z.B. Deckel mit je einer wiederverschliessbaren Öffnung vorgesehene Einheiten zugeschnitten werden.

## Patentansprüche

1. Verfahren zur Herstellung eines Verpackungsbeutels mit einer Verpackungsfolie (10) aus einer die Beutelinnenseite bildenden inneren Folie (26) und einer die Beutelaussenseite bildenden äusseren Folie (28), wobei die beiden Folien (26, 28) der Verpackungsfolie (10) unter Bildung eines integrierten Systems (12) zum leichten Öffnen und Wiederverschliessen ausserhalb des Bereichs des Öffnungs- und Wiederverschliesssystems (12) über einen Permanentkleber (30) miteinander verbunden sind, wobei die innere Folie (26) eine erste Schwächungslinie (50) zur Bildung einer Öffnung (16) und die äussere Folie (28) eine zweite Schwächungslinie (54) zur Bildung einer allseitig von der äusseren Folie (28) umgebenen und aus dieser heraustrennbaren, die erste Schwächungslinie (50) überdeckende Verschliesslasche (14) aufweist, und wobei zwischen den beiden Folien (26, 28) im Bereich der Verschliesslasche (14) ein Selbsthaftkleber (20) angeordnet ist, und wobei die erste Schwächungslinie (50) eine über den Permanentkleber (30) mit der äussere Folie (28) verbundene Öffnungsfläche (52) der inneren Folie (26) begrenzt und der Selbsthaftkleber (20) zwischen den beiden Schwächungslinien (50, 54) angeordnet ist
**dadurch gekennzeichnet, dass**
auf die in Bandform vorliegende innere Folie (26) kontinuierlich der Selbsthaftkleber (20) oder der Permanentkleber (20) aufgetragen wird, die derart beschichtete innere Folie (26) getrocknet wird und nachfolgend die ersten Schwächungslinien (50) in die innere Folie (26) geprägt oder geschnitten werden, auf die in Bandform vorliegende äussere Folie (28) kontinuierlich der Permanentkleber (30) oder der Selbsthaftkleber (20) aufgetragen wird, die derart beschichtete äussere Folie (28) getrocknet wird und anschliessend die ersten Schwächungslinien (50) in die äussere Folie (28) geprägt oder geschnitten werden, die derart vorkonfektionierten Folien (26, 28) zusammengeführt und miteinander zur Verpackungsfolie (10) mit integriertem Öffnungs- und Wiederverschliesssystem (12) verklebt werden, und die Verpackungsfolie (10) über eine Siegel- oder Klebenaht mit sich selbst oder mit einer weiteren Folie zu dem Beutel geformt wird.

2. Verfahren nach Anspruch 1, **dadurch gekennzeichnet, dass** auf eine der Folien (26, 28) zusätzlich zum Selbsthaftkleber (20) im Bereich einer Greif- und Aufreisshilfe (22) der Versschliesslasche (14) eine Antihaftschicht (24) aufgetragen wird.

3. Verfahren nach Anspruch 1 oder 2, **dadurch gekennzeichnet, dass** die erste Schwächungslinie (50) nicht über die gesamte Dicke der inneren Folie (26) durchgehend geprägt oder geschnitten und/oder die innere Folie (26) teilweise durchtrennt wird.

4. Verfahren nach Anspruch 1 oder 2, **dadurch gekennzeichnet, dass** die die innere Folie (26) von der ersten Schwächungslinie (50) vollständig durchtrennt wird.

5. Verfahren nach einem der Ansprüche 1 bis 4, **dadurch gekennzeichnet, dass** die zweite Schwächungslinie (54) nicht über die gesamte Dicke der äusseren Folie (28) durchgehend geprägt oder geschnitten und/oder die äussere Folie (28) teilweise durchtrennt wird.

6. Verfahren nach einem der Ansprüche 1 bis 4, **dadurch gekennzeichnet, dass** die die äussere Folie (30) von der zweiten Schwächungslinie (54) vollständig durchtrennt wird.

7. Verfahren nach einem der Ansprüche 1 bis 6, **dadurch gekennzeichnet, dass** die innere Folie (26) aus orientiertem Polypropylen (OPP), Polyethylen (PE), Polystyrol (PS), Polylactat (PLA), Polyethylenterephtalat (PET), biaxial verstrecktem oder cast Polyamid (PA), aus Zellglas oder aus Papier besteht.

8. Verfahren nach einem der Ansprüche 1 bis 7, **dadurch gekennzeichnet, dass** die äussere Folie (28) aus orientiertem Polypropylen (OPP), Polyethylen hoher Dichte (PEHD), Polystyrol (PS), Polylactat (PLA), Polyethylenterephtalat (PET), biaxial verstrecktem oder cast Polyamid (PA), aus Zellglas oder aus Papier besteht.

9. Verfahren nach einem der Ansprüche 1 bis 8, **dadurch gekennzeichnet, dass** der Permanentkleber (30) auf der Basis von Polyurethan aufgebaut ist.

10. Verfahren nach einem der Ansprüche 1 bis 9, **dadurch gekennzeichnet, dass** der Selbsthaftkleber (20) ein Acrylatkleber oder ein anderes selbstklebendes Harz ist.

## Claims

1. Method of producing a packaging bag comprising a packaging film (10) consisting of an inner film (26) forming the inside of the bag and an outer film (28) forming the outside of the bag, in which, in order to form an integral system (12) for easy opening and reclosing, the two films (26, 28) of the packaging film (10) are joined together outside the region of the opening and reclosing system (12) by means of a permanent adhesive (30), the inner film (26) has a first line of weakness (50) in order to form an opening (16) and the outer film (28) has a second line of weakness (54) in order to form a closing flap (14) which covers the first line of weakness (50) and which is surrounded on all sides by the outer film (28) and can be detached therefrom, a pressure-sensitive adhesive (20) is arranged between the two films (26, 28) in the region of the closing flap (14), the first line of weakness (50) delimits an opening surface (52) of the inner film (26) joined to the outer film (28) by means of the permanent adhesive (30) and the pressure-sensitive adhesive (20) is arranged between the two lines of weakness (50, 54), **characterised in that** the pressure-sensitive adhesive (20) or the permanent adhesive (20) is applied continuously to the inner film (26) in the form of a web, the inner film (26) coated in this manner is dried and then the first lines of weakness (50) are pressed or cut into the inner film (26), the permanent adhesive (30) or the pressure-sensitive adhesive (20) is applied continuously to the outer film (28) in the form of a web, the outer film (28) coated in this manner is dried and then the first lines of weakness (50) are pressed or cut into the outer film (28), the films (26, 28) prefabricated in this manner are assembled and bonded together to form the packaging film (10) with an integral opening and reclosing system (12) and the packaging film (10) is sealed to itself or to another film by means of a sealed or bonded seam in order to form the bag.

2. Method according to claim 1, **characterised in that** a non-stick coating (24) is applied to one of the films (26, 28) in addition to the pressure-sensitive adhesive (20) in the region of a gripping and tearing aid (22) of the closing flap (14).

3. Method according to claim 1 or claim 2, **characterised in that** the first line of weakness (50) is not pressed or cut through the entire thickness of the inner film (26) and/or the inner film (26) is partially severed.

4. Method according to claim 1 or claim 2, **characterised in that** the [the] inner film (26) is completely severed by the first line of weakness (50).

5. Method according to one of claims 1 to 4, **characterised in that** the second line of weakness (54) is not pressed or cut through the entire thickness of the outer film (28) and/or the outer film (28) is partially severed.

6. Method according to one of claims 1 to 4, **characterised in that** the [the] outer film (30) is completely severed by the second line of weakness (54).

7. Method according to one of claims 1 to 6, **characterised in that** the inner film (26) consists of oriented polypropylene (oPP), polyethylene (PE), polystyrene (PS), polylactate (PLA), polyethylene terephthalate (PET), biaxially oriented or cast polyamide (PA), cellophane or paper.

8. Method according to one of claims 1 to 7, **characterised in that** the outer film (28) consists of oriented polypropylene (oPP), high-density polyethylene (HDPE), polystyrene (PS), polylactate (PLA), polyethylene terephthalate (PET), biaxially oriented or cast polyamide (PA), cellophane or paper.

9. Method according to one of claims 1 to 8, **characterised in that** the permanent adhesive (30) is based on polyurethane.

10. Method according to one of claims 1 to 9, **characterised in that** the pressure-sensitive adhesive (20) is an acrylic adhesive or another self-adhesive resin.

## Revendications

1. Procédé pour la fabrication d'un sac d'emballage avec une feuille d'emballage (10) à partir d'une feuille intérieure (26) qui forme le côté intérieur du sac et d'une feuille extérieure (28) qui forme le côté extérieur du sac, dans lequel les deux feuilles (26, 28) de la feuille d'emballage (10) sont reliées l'une à l'autre en formant un système intégré (12) pour ouvrir et refermer aisément le sac, via une colle permanente (30) à l'extérieur de la région d'un système d'ouverture et de refermeture (12), dans lequel la feuille intérieure (26) présente une première ligne d'affaiblissement (50) pour la réalisation d'une ouverture (16) et la feuille extérieure (28) présente une seconde ligne d'affaiblissement (54) pour la réalisation d'une patte de fermeture (14) qui est entourée de tous côtés par la feuille extérieure (28) et qui est susceptible d'être séparée depuis celle-ci, et recouvrant la première ligne d'affaiblissement (50), et entre les deux feuilles (26, 28) dans la région de la patte de fermeture (14) est appliquée une colle autoadhésive (20), la première ligne d'affaiblissement (50) délimitant une surface d'ouverture (52) de la feuille intérieure (26) reliée à la feuille extérieure (28) via la colle permanente (30), et la colle autoadhésive (20) est agencée entre les deux lignes d'affaiblissement (50, 54),
**caractérisé en ce que**
sur la feuille intérieure (26) qui se présente sous la forme d'une bande, on applique en continu la colle autoadhésive (20) ou la colle permanente (20), on fait sécher la feuille intérieure (26) ainsi revêtue et on procède ensuite à l'impression ou à la découpe des premières lignes d'affaiblissement (50) dans la feuille intérieure (26),
sur la feuille extérieure (28) qui se présente sous la forme d'une bande, on applique en continu la colle permanente (30) ou la colle autoadhésive (20), on fait sécher la feuille extérieure (28) ainsi revêtue et on procède ensuite à l'impression ou à la découpe des premières lignes d'affaiblissement (50) dans la feuille extérieure (28), les feuilles (26, 28) ainsi préconfectionnées sont regroupées et collées l'une à l'autre pour donner la feuille d'emballage (10) avec système intégré d'ouverture et de refermeture (12), et la feuille d'emballage (10) est mise sous la forme du sac via un cordon de scellement ou de collage sur elle-même ou sur une autre feuille.

2. Procédé selon la revendication 1, **caractérisé en ce que** sur l'une des feuilles (26, 28), on applique en supplément de la colle autoadhésive (20) une couche antiadhésive (24) dans la région d'un accessoire d'agrippement et d'arrachement (22) de la patte de fermeture (14).

3. Procédé selon la revendication 1 ou 2, **caractérisé en ce que** la première ligne d'affaiblissement (50) est imprimée ou découpée sans traverser l'épaisseur totale de la feuille intérieure (26), et/ou la feuille intérieure (26) est partiellement découpée.

4. Procédé selon la revendication 1 ou 2, **caractérisé en ce que** la feuille intérieure (26) est entièrement découpée par la première ligne d'affaiblissement (50).

5. Procédé selon l'une des revendications 1 à 4, **caractérisé en ce que** la seconde ligne d'affaiblissement (54) est imprimée ou découpée sans traverser l'épaisseur totale de la feuille extérieure (28), et/ou la feuille extérieure (28) et partiellement découpée.

6. Procédé selon l'une des revendications 1 à 4, **caractérisé en ce que** la feuille extérieure (30) est entièrement découpée par la seconde ligne d'affaiblissement (54).

7. Procédé selon l'une des revendications 1 à 6, **caractérisé en ce que** la feuille intérieure (26) est en polypropylène orienté (OPP), en polyéthylène (PE), en polystyrène (PS), en polylactate (PLA), en polyéthylène téréphtalate (PET), en polyamide (PA) étiré de façon biaxiale ou coulé, en verre cellulaire ou en papier.

8. Procédé selon l'une des revendications 1 à 7, **caractérisé en ce que** la feuille extérieure (28) est en polypropylène orienté (OPP), en polyéthylène à haute densité (PEHD), en polystyrène (PS), en polylactate (PLA), en polyéthylène téréphtalate (PET), en polyamide (PA) étiré de façon biaxiale ou coulé, en verre cellulaire ou en papier.

9. Procédé selon l'une des revendications 1 à 8, **caractérisé en ce que** la colle permanente (30) est réalisée à base de polyuréthane.

10. Procédé selon l'une des de revendications 1 à 9, **caractérisé en ce que** la colle autoadhésive (20) et une colle acrylate ou une autre résine autoadhésive.
